# EUROPÄISCHE PATENTANMELDUNG

(11) **EP 0 802 495 A2**
(43) Veröffentlichungstag der Anmeldung: **22.10.1997**
(21) Anmeldenummer: 97102172.0
(22) Anmeldetag: 12.02.1997
(51) Int. Cl.: G06F 17/60, G07F 11/42

(54) **Verfahren und Vorrichtung zur parameterorientierten Auswahl von einzelnen oder Gruppen von Gegenständen**

(30) Priorität: 16.04.1996 DE 19614757
(71) Anmelder: Volkswagen Aktiengesellschaft, 38436 Wolfsburg (DE)
(72) Erfinder: Bastian, Andreas, Dr., 38114 Braunschweig (DE)

(57) **Zusammenfassung**

Die Erfindung betrifft sowohl ein Verfahren als auch eine Vorrichtung zur parameterorientierten Auswahl von einzelnen oder Gruppen von Gegenständen aus einer Vielzahl von unterschiedlichen Gegenständen.

Erfindungsgemäß ist eine Verarbeitungseinrichtung (1) vorgesehen, welcher über eine Eingabeeinrichtung (4) eine Mehrzahl von unterschiedlichsten Parametern (P₁; P_{1.1}; P_{1.2}) zugeführt werden. Gleichzeitig ruft die Verarbeitungseinrichtung (1) in einem ersten Speicher (2) abgelegte Verknüpfungsregeln (R₁) sowie aus einem zweiten Speicher (3) abgelegte Daten (D₁) der auswählbaren Gegenstände ab und verknüpft mittels der Verknüpfungsregeln (R₁) die eingegebenen Parameter (P₁) mit den Daten (D₁) der auswählbaren Gegenstände. Aufgrund der Verknüpfung werden von der Verarbeitungseinrichtung (1) spezifische einzelne oder Gruppen von Gegenständen (F₁ - F₃) ausgewählt.

Die Erfindung dient zur Auswahl von komplexen Gegenständen, welche von einer großen Anzahl von unscharfen, zum Teil auch gegensätzlichen Parametern bestimmt ist.

## Beschreibung

Die Erfindung betrifft ein Verfahren zur parameterorientierten Auswahl von einzelnen oder Gruppen von Gegenständen aus einer Vielzahl von unterschiedlichen Gegenständen.

Bei der Wahl eines oder mehrerer Gegenstände aus einer Reihe sehr komplexer Gegenstände müssen unzählige Entscheidungen getroffen werden. Sind sämtliche Randbedingungen, Entscheidungsmöglichkeiten und deren Auswirkungen bekannt, so fällt die Entscheidung und damit die Auswahl relativ einfach. Fehlen einige dieser Informationen, gestaltet sich die Entscheidungsfindung schwierig. Bekannte Systeme zur Unterstützung einer Entscheidung können jedoch nur zweiwertige Entscheidungen treffen, beispielsweise "Ja" oder "Nein", "1" oder "0", "schwarz" oder "weiß".

So ist aus der deutschen Offenlegungsschrift DE 42 25 165 A1 ein Verkaufsautomat bekannt, der in einem Gehäuse mehrere übereinander angeordnete Schubladen mit je mehreren nebeneinander angeordneten horizontalen Schächten aufweist. In jedem Schacht ist ein Stapel von gleichen Gegenständen angeordnet. Ein möglicher Käufer kann durch ein Sichtfenster den jeweils ersten Gegenstand jedes Schachtes sehen und sich durch eine Ja-Nein-Entscheidung aussuchen, welchen Gegenstand er kaufen möchte.

In der deutschen Offenlegungsschrift DE 42 44 198 A1 ist ein Musikabspielsystem beschrieben, das über eine Vielzahl von abspielbaren Musikstücken verfügt. Des weiteren ist eine Eingabeeinrichtung vorgesehen, mittels der auf einer Musikabspieleinheit abzuspielende Musikstücke ebenfalls über eine Ja-Nein-Abfrage ausgewählt werden.

Handelt es sich jedoch um Gegenstände, die sich auch in Details oder Varianten unterscheiden, wie es beispielsweise bei Kraftfahrzeugen der Fall ist, bei denen zu einem bestimmten Kraftfahrzeugtyp zusätzlich die Motorisierung, die Sitzbezüge oder zusätzliche Ausstattungen wählbar sind, führt eine zweiwertige Entscheidungsfindung nicht zum Erfolg.

Die Aufgabe der Erfindung ist es deshalb, ein Auswahlverfahren zu schaffen, welches bei der Auswahl von komplexen Gegenständen mit einer Vielzahl von Details und Varianten, welche von einer großen Anzahl von unscharfen, zum Teil auch gegensätzlichen Parametern bestimmt wird, anwendbar ist.

Die Aufgabe wird durch ein Verfahren nach Anspruch 1 und einer Vorrichtung nach Anspruch 13 gelöst. Vorteilhafte Aus- und Weiterbildungen sind in den Unteransprüchen dargestellt.

Erfindungsgemäß ist eine Verarbeitungseinrichtung vorgesehen, welcher über eine Eingabeeinrichtung eine Mehrzahl von unterschiedlichsten Parametern zugeführt wird. Gleichzeitig ruft die Verarbeitungseinrichtung in einem ersten Speicher abgelegte Verknüpfungsregeln sowie aus einem zweiten Speicher abgelegte Daten der auswählbaren Gegenstände ab und verknüpft mittels der, beispielsweise auf der Auswertung von Erfahrungen basierenden Verknüpfungsregeln die eingegebenen Parameter mit den Daten der auswählbaren Gegenstände. Aufgrund der Verknüpfung werden von der Verarbeitungseinrichtung spezifische einzelne oder Gruppen von Gegenständen ausgewählt. Dabei werden die Verknüpfungsregeln vorzugsweise aus Fuzzy-Regeln gebildet. Eine andere Möglichkeit steht in der Verwendung von neuronalen Netzwerken. Die Verknüpfungsregeln selbst sind Regeln zur Auswertung der Parameter und/oder Regeln zur Auswahl der Gegenstände aufgrund der Parameter oder der ausgewerteten Parameter.

Die ausgewählten einzelnen oder Gruppen von Gegenständen werden nach einer Weiterbildung der Erfindung über eine Anzeigeeinrichtung angezeigt. Werden mehrere ausgewählte Gegenstände angezeigt, wird der Bedienperson über eine Bedieneinrichtung die Möglichkeit gegeben, einen der angezeigten Gegenstände anzuwählen. Der angewählte Gegenstand kann nach einer Ausbildung der Erfindung von der Bedienperson über die Eingabe zusätzlicher Parameter modifiziert werden oder es können Details oder einzelne Teile dieses Gegenstandes auf der Anzeigeeinrichtung näher dargestellt werden.

Hat die Auswahl der spezifischen einzelnen oder Gruppen von Gegenständen nicht zum gewünschten Enfolg geführt, werden von der Bedienperson nach Eingabe eines Anforderungsbefehls über die Bedieneinrichtung weitere Parameter angefordert, diese Parameter ebenfalls mit aus dem zweiten Speicher zugeführten Daten der auszuwählenden Gegenstände über aus dem ersten Speicher zugeführte weitere Verknüpfungsregeln verknüpft und aufgrund der Verknüpfung das Auswahlergebnis modifiziert, d. h. weitere Gegenstände ausgewählt und ggf. angezeigt. Dabei besteht nach der Erfindung die Möglichkeit, daß aufgrund der bereits eingegebenen Parameter und ihrer Verknüpfung mit den Daten der auswählbaren Gegenstände die Verarbeitungseinrichtung Änderungen der bereits ausgewählten Gegenstände bildet und diese der Bedienperson auf der Anzeigeeinrichtung vorschlägt. Über die Bedieneinrichtung kann diese dann der Verarbeitungseinrichtung einen Auswahlbefehl senden, über den der bereits ausgewählte Gegenstand dann tatsächlich verändert oder komplettiert wird.

Nach einer vorteilhaften Ausbildung der Erfindung sind die über die Eingabeeinrichtung eingebbaren Parameter Merkmale der auszuwählenden Gegenstände, Merkmale einer oder mehrerer der die auszuwählenden Gegenstände benutzenden Personen und/oder Merkmale der Verwendung der auszuwählenden Gegenstände.

Die Erfindung ist vorteilhafterweise bei der Auswahl bzw. dem Kauf von Kraftfahrzeugen einsetzbar. Die zusätzlichen Parameter, mit denen die ausgewählten Kraftfahrzeuge veränderbar bzw. ergänzbar sind, stellen dann Ausstattungsteile bzw. Ausstattungspakete der Kraftfahrzeuge dar.

Beim Kraftfahrzeugkauf muß nicht nur die Entscheidung über ein zu wählendes bzw. zu kaufendes Kraftfahrzeug getroffen werden, sondern auch aus einer Vielzahl von zusätzlichen Ausstattungsmöglichkeiten gewählt werden. Die Erfindung gibt aufgrund eines durch die Eingabe von einer Mehrzahl von unterschiedlichen Parametern gebildeten Anforderungsprofil an die auswählbaren Gegenstände (Kraftfahrzeuge) und die Verknüpfung dieses Anforderungsprofils mit Daten der auswählbaren Gegenstände (Kraftfahrzeuge) eine Auswahl von Gegenständen und damit eine wesentliche Entscheidungshilfe der Bedienperson vor. Die einzelnen Gegenstände (Kraftfahrzeuge) können danach durch die Bedienperson komplettiert werden.

Sagt der Bedienperson das Auswahlergebnis nicht zu, wird durch Abfrage weiterer Parameter das Anforderungsprofil verändert und weitere Gegenstände (Kraftfahrzeuge) als Entscheidungshilfe der Bedienperson vorgegeben.

Nachfolgend wird die Erfindung anhand eines Ausführungsbeispieles näher beschrieben. Die zugehörigen Zeichnungen zeigen:
- Figur 1: ein Blockschaltbild einer Vorrichtung zur parameterorientierten Auswahl und
- Figur 2: eine graphische Darstellung einer Verknüpfungsregel.

Ein Beispiel für die Komplexität bei der Entscheidungsfindung aus der Praxis ist der Kauf eines Kraftfahrzeuges. Hier muß sich der Mensch nicht nur für ein bestimmtes Fahrzeugmodell entscheiden, sondern auch aus einer Vielfalt an zusätzlichen Ausstattungsmöglichkeiten wählen. Dieser Entscheidungsprozeß wird bestimmt durch eine große Anzahl an unscharfen zum Teil auch gegensätzlichen Kriterien. So möchte der potentielle Kunde, beispielsweise ein Kraftfahrzeug mit einer hohen Motorisierung und einer Reihe von Ausstattungsmerkmalen, hier sind beispielsweise Klimaanlage, Vierradantrieb zu nennen, wählen, es soll aber verbrauchsarm sein.

Aber auch schon bei der Kraftfahrzeugtypauswahl fällt die Entscheidung schwer. Es soll ein sportliches Kraftfahrzeug sein, aber einen großen Kofferraum aufweisen.

Das im Ausführungsbeispiel dargestellte entscheidungsunterstützende System soll bei der Entscheidungsfindung sowohl des Kraftfahrzeugtyps als auch für die Auswahl der Ausstattungsteile oder -pakete behilflich sein.

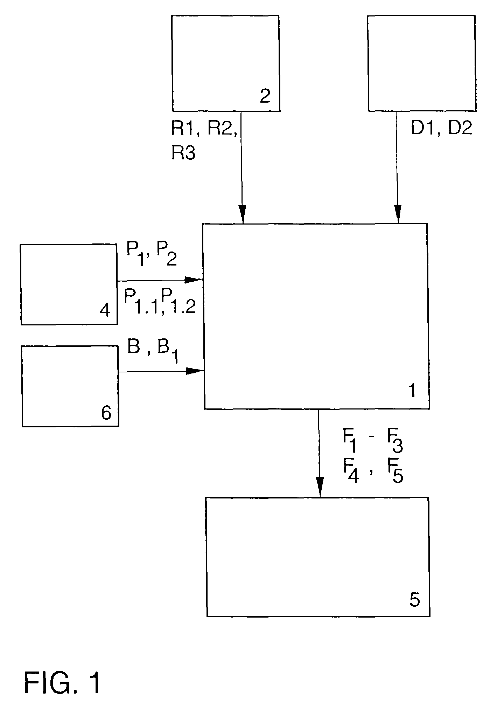

Die in Figur 1 dargestellte Vorrichtung weist eine Verarbeitungseinrichtung 1 auf, welche sowohl mit einer Eingabeeinrichtung 4 zur Eingabe der unterschiedlichsten Parameter P₁, P₂, P_{A}, mit einem ersten Speicher 2, in welchem Verknüpfungsregeln R₁; R₂; R₃ abgelegt sind und einem zweiten Speicher 3 in welchem die Daten D₁, D₂ der auswählbaren Kraftfahrzeuge und der Ausstattungsteile und/oder der Ausstattungspakete abgelegt sind, verbunden ist. Des weiteren weist die Vorrichtung eine Anzeigeeinrichtung 5 auf, mit derer die ausgewählten Kraftfahrzeuge F₁ - F₃ bzw. Einzelheiten der Kraftfahrzeuge zur Anzeige gebracht werden können.

Zur Entscheidungsfindung, welches Kraftfahrzeug für den Kauf in Frage kommt, werden durch die Verarbeitungseinrichtung 1 im Dialog von der Bedienperson die unterschiedlichsten Parameter P₁ abgefordert. Dies können Merkmale der die auswählbaren Kraftfahrzeuge benutzenden Personen sein, wie z. B. :
- Sind Sie Fahrer eines Neuwagens?
- Welches Geschlecht haben Sie?
- Welchen Schulabschluß haben Sie?
- Welchen Beruf üben Sie aus?
- Fahren Sie überwiegend gemütlich oder sportlich?
- Wie sind Ihre Ansichten zum Autofahren allgemein?

Weiterhin werden als Parameter Merkmale der auswählbaren Kraftfahrzeuge abgefragt. Dies kann beispielsweise die Anzahl der Türen, ob ein Dieselmotor oder ein Ottomotor oder auch ob eine Großraumlimousine oder ein Cabriolet gewünscht wird, sein. Auch Merkmale der Verwendung der auswählbaren Kraftfahrzeuge sind abfragbar. Als Beispiel sind hier zu nennen: Wieviel Kilometer fahren Sie jährlich oder für welche Zwecke soll das Kraftfahrzeug benutzt werden? Ist Ihnen der Komfort im Kraftfahrzeug sehr wichtig?
Die Eingabe der Parameter kann dabei über die Festlegung eines Punktes auf einen auf der Anzeigeeinrichtung 5 dargestellten Balken erfolgen, dessen beide Enden die Extreme darstellen.

Die Parameter P₁ werden über die aus dem ersten Speicher 2 der Verarbeitungseinrichtung 1 zugeführten Verknüpfungsregeln R₁ mit den Daten D₁ der auswählbaren Kraftfahrzeuge F verknüpft.

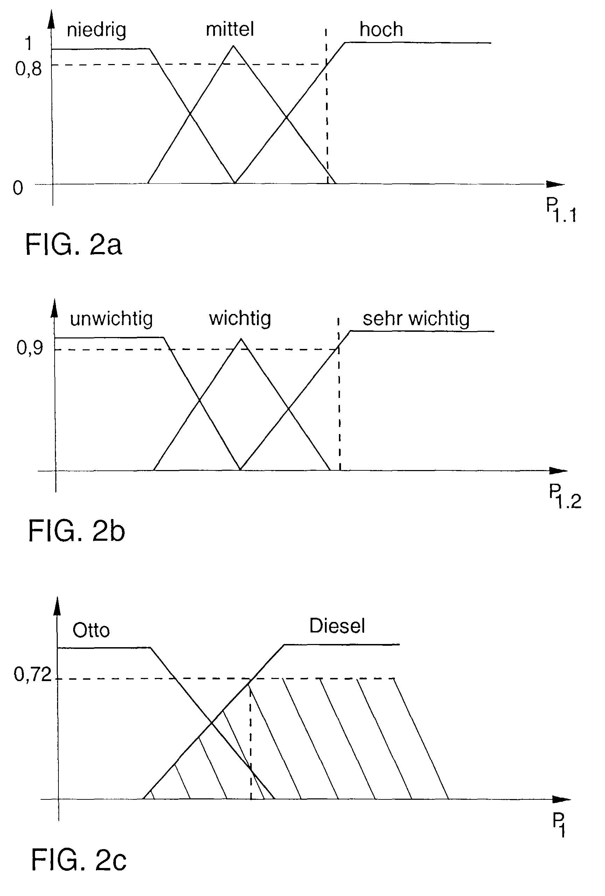

In der Figur 2 ist eine Verknüpfungsregel R_{1.1} "Kilometerleistung" in UND-Verknüpfung mit dem Parameter P_{1.2} "Wichtigkeit eines sparsamen Verbrauchs" dargestellt. Im ersten Schritt wird die Klassenzugehörigkeit des Parameters P_{1.1} ermittelt (Fig. 2a). Die Bedienperson hat eingegeben, daß das auszuwählende Kraftfahrzeug eine hohe Kilometerleistung haben soll. Die Klassenzugehörigkeit beträgt damit 0,8. Für den Parameter P_{1.2}, der in Fig. 2b gezeigt ist, wurde eingegeben, daß ein sparsamer Verbrauch sehr wichtig ist, damit beträgt die Klassenzugehörigkeit 0,9.
Zur Ermittlung des Erfüllungsgrades des Parameters P₁ "Wahl des Motors" werden die Klassenzugehörigkeiten der beiden Parameter P_{1.1} und P_{1.2} multipliziert, er beträgt demzufolge 0,72 für den Dieselmotor. (Fig. 2c)

Nach der Verknüpfung aller Parameter P₁ mit den entsprechenden Daten D₁ der auswählbaren Kraftfahrzeuge wählt die erfindungsgemäße Vorrichtung drei Kraftfahrzeuge F₁ bis F₃ aus und bringt sie auf der Anzeigeeinrichtung 5 der Bedienperson zur Ansicht. Über die Bedieneinrichtung 6, die in der Eingabeeinrichtung 4 integriert werden kann, kann nun ein Kraftfahrzeug angewählt und sich näher angesehen werden, beispielsweise indem Details vergrößert auf der Anzeigeeinrichtung dargestellt werden. Das System kann dabei selbständig zusätzliche Ausstattungsvorschläge aufgrund der bereits eingegebenen Parameter P₁ und der mit ihnen verknüpften Daten D₁ tätigen. Dies geschieht insbesondere dann, wenn sich widersprechende Parameter vorliegen, beispielsweise ein hoher Ausstattungsgrad, der den vorgegebenen maximalen Preisrahmen sprengt. Über einen Auswahlbefehl B₁ kann die Bedienperson das ausgewählte Kraftfahrzeug F₁ - F₃ mit dem Ausstattungsvorschlag komplettieren. Außerdem ist es möglich, über eine Eingabe zusätzlicher Parameter P_{A}, das ausgewählte Kraftfahrzeug zu verändern bzw. zu ergänzen, beispielsweise mit einer Klimaanlage oder einem Sportfahrwerk auszurüsten.

Sagt keines der ausgewählten und angezeigten Kraftfahrzeuge der Bedienperson zu, kann durch Eingabe eines Anforderungsbefehls B über die Bedieneinrichtung 6 ein erneuter Auswahlvorgang in der Verarbeitungseinrichtung 1 gestartet werden. Dabei werden wiederum im Dialog mit der Bedienperson weitere Parameter P₂ von der Verarbeitungseinrichtung 1 angefordert und mit aus dem zweiten Speicher 3 zugeführten Daten D₂ über aus dem ersten Speicher abgeforderten Verknüpfungsregeln R₂ verknüpft.

Aufgrund dieser Verknüpfung wird das Auswahlergebnis modifiziert und weitere Kraftfahrzeuge F₄, F₅ auf der Anzeigeeinrichtung 5 zur Anzeige gebracht.

Die Erfindung läßt sich nicht nur für die Auswahl von Gegenständen, wie Kraftfahrzeugen, nutzen, sondern ist vorteilhafterweise auch für die Wahl von Dienstleistungen anwendbar.

### BEZUGSZEICHENLISTE

- 1: Verarbeitungseinrichtung
- 2: Speicher
- 3: Speicher
- 4: Eingabeeinrichtung
- 5: Anzeigeeinrichtung
- 6: Bedieneinrichtung
- R₁, R₂, R₃: Verknüpfungsregeln
- P₁, P₂: Parameter
- P_{A}: zusätzliche Parameter
- D₁, D₂: Daten der auswählenbaren Gegenstände
- B: Anforderungsbefehl
- B₁: Auswahlbefehl
- P_{1.1}: Parameter "Kilometerleistung"
- P_{1.2}: Parameter "Wichtigkeit eines sparsamen Verbrauchs"

## Patentansprüche

1. Verfahren zur parameterorientierten Auswahl von einzelnen oder Gruppen von Gegenständen aus einer Vielzahl von unterschiedlichen Gegenständen, dadurch gekennzeichnet, daß einer Verarbeitungseinrichtung (1) in einem ersten Speicher (2) abgelegte Verknüpfungsregeln (R₁), in einem zweiten Speicher (3) abgelegte Daten (D₁) der auswählbaren Gegenstände (F) und über eine Eingabeeinrichtung (4) eine Mehrzahl von Parametern (P₁) zugeführt werden und in der Verarbeitungseinrichtung (1) die zugeführten Parameter (P₁) und die Daten (D₁) der auswählbaren Gegenstände mit Hilfe der Verknüpfungsregeln (R₁) derart miteinander verknüpft werden, daß aufgrund der Verknüpfung spezifische einzelne oder Gruppen von Gegenständen (F₁ - F₃) ausgewählt werden.

2. Verfahren nach Anspruch 1, dadurch gekennzeichnet, daß die zugeführten Parameter (P₁) vor der Verknüpfung mit den Daten (D₁) der auswählbaren Gegenstände (F) miteinander kombiniert werden.

3. Verfahren nach Anspruch 1 oder 2, dadurch gekennzeichnet, daß nach Eingabe eines Anforderungsbefehls (B) die Verarbeitungseinrichtung (1) über die Eingabeeinrichtung (4) weitere Parameter (P₂) anfordert, diese Parameter ebenfalls mit aus dem zweiten Speicher (3) zugeführten Daten (D₂) der auszuwählenden Gegenstände über aus dem ersten Speicher (2) zugeführte Verknüpfungsregeln (R₂) verknüpft und aufgrund der Verknüpfung weitere Gegenstände (F₄, F₅) auswählt.

4. Verfahren nach einem der Ansprüche 1 bis 3, dadurch gekennzeichnet, daß die einzelnen oder Gruppen von Gegenständen (F₁ - F₃; F₄, F₅) mit einer Anzeigeeinrichtung (5) angezeigt werden.

5. Verfahren nach Anspruch 4, dadurch gekennzeichnet, daß über eine Bedieneinrichtung (6) einer der ausgewählten Gegenstände (F₁ - F₃; F₄, F₅) angewählt wird.

6. Verfahren nach Anspruch 4 oder 5, dadurch gekennzeichnet, daß auf der Anzeigeeinrichtung (5) einzelne Teile der angewählten Gegenstände angezeigt werden.

7. Verfahren nach einem der Ansprüche 1 bis 6, dadurch gekennzeichnet, daß in der Verarbeitungseinrichtung (1) einer oder mehrere der Parameter (P₁; P₂) über zusätzlich aus dem ersten Speicher (2) zugeführten Verknüpfungsregeln (R₃) mit aus dem zweiten Speicher (3) zugeführte Daten (D₁; D₂) verknüpft werden und das Ergebnis der Verknüpfung eine Erweiterung der angewählten Gegenstände (F₁ - F₃; F₄, F₅) darstellt.

8. Verfahren nach Anspruch 7, dadurch gekennzeichnet, daß über die Bedieneinrichtung ein Auswahlbefehl (B₁) an die Verarbeitungseinrichtung gesendet wird, über den mindestens einer der ausgewählten Gegenstände mit dem Ergebnis der Verknüpfung verändert und/oder ergänzt wird.

9. Verfahren nach einem der Ansprüche 1 bis 8, dadurch gekennzeichnet, daß der Verarbeitungseinrichtung (1) über die Eingabeeinrichtung (4) zusätzliche Parameter (P_{A}) zugeführt werden, mit denen die ausgewählten Gegenstände (F₁ - F₃; F₄, F₅) verändert und/oder ergänzt werden.

10. Verfahren nach einem der Ansprüche 1 bis 9, dadurch gekennzeichnet, daß die Verknüpfungsregeln (R₁; R₂; R₃) durch Fuzzy-Regeln gebildet werden.

11. Verfahren nach einem der Ansprüche 1 bis 9. dadurch gekennzeichnet, daß die Verknüpfungsregeln (R₁; R₂; R₃) durch neuronale Netzwerke gebildet werden.

12. Verfahren nach einem der Ansprüche 1 bis 11. dadurch gekennzeichnet, daß die Verknüpfungsregeln (R₁; R₂; R₃) Regeln zur Auswertung der Parameter (P₁; P₂) und/oder Regeln zur Auswahl der Gegenstände aufgrund der Parameter (P₁; P₂) oder der ausgewerteten Parameter (P₁; P₂) darstellen.

13. Verfahren nach einem der Ansprüche 1 bis 12, dadurch gekennzeichnet, daß die über die Eingabeeinrichtung (4) eingebbaren Parameter (P₁; P₂) Merkmale der auszuwählenden Gegenstände (F), Merkmale einer oder mehrerer der die auszuwählenden Gegenstände benutzenden Personen und/oder Merkmale der Verwendung der auszuwählenden Gegenstände sind.

14. Verfahren nach einem der Ansprüche 1 bis 13, dadurch gekennzeichnet, daß die auswählbaren Gegenstände (F) Kraftfahrzeuge sind.

15. Verfahren nach Anspruch 14, dadurch gekennzeichnet, daß die zusätzlichen Parameter (P_{A}) Ausstattungsteile oder Ausstattungspakete der Kraftfahrzeuge sind.

16. Vorrichtung zur parameterorientierten Auswahl von einzelnen oder Gruppen von Gegenständen aus einer Vielzahl von unterschiedlichen Gegenständen, dadurch gekennzeichnet, daß ein erster Speicher (2), in welchem Verknüpfungsregeln (R₁) abgelegt sind, und ein zweiter Speicher (3), in welchem Daten (D₁) der auswählbaren Gegenstände (F) abgelegt sind, mit einer Verarbeitungseinrichtung (1) verbunden sind, daß die Verarbeitungseinrichtung (1) weiterhin eine Verbindung zu einer Eingabeeinrichtung (4) zur Eingabe einer Mehrzahl von Parametern (P₁) aufweist, wobei bei Eingabe der Parameter über die Eingabeeinrichtung (4) die im ersten Speicher (2) abgelegten Verknüpfungsregeln (R₁) und die im zweiten Speicher (3) abgelegten Daten (D₁) der auswählbaren Gegenstände von der Verarbeitungseinrichtung (1) abrufbar und die eingegebenen Parameter (R₁) und die Daten (D₁) der auswählbaren Gegenstände mit Hilfe der Verknüpfungsregeln (R₁) in der Verarbeitungseinrichtung (1) derart verknüpfbar sind, daß als Folge der Verknüpfung einzelne oder Gruppen von Gegenständen (F₁ - F₃) ausgewählt sind.

17. Vorrichtung nach Anspruch 16, dadurch gekennzeichnet, daß die zugeführten Parameter vor der Verknüpfung mit den Daten (D₁; D₂) der auswählbaren Gegenstände (F) miteinander kombinierbar sind.

18. Vorrichtung nach Anspruch 16 oder 17, dadurch gekennzeichnet, daß nach Eingabe eines Anforderungsbefehls (B) über eine Bedieneinrichtung (6) durch die Verarbeitungseinrichtung (1) über die Eingabeeinrichtung (4) weitere Parameter (P₂) anforderbar sind, diese in der Verarbeitungseinrichtung (1) mit aus dem zweiten Speicher (3) zugeführten Daten (D₂) über aus dem ersten Speicher (2) zugeführte Verknüpfungsregeln (R₂) verknüpfbar sind und aufgrund der Verknüpfung weitere Gegenstände (F₄, F₅) auswählbar sind.

19. Vorrichtung nach einem der Ansprüche 16 bis 18, dadurch gekennzeichnet, daß eine Anzeigeeinrichtung (5) zur Anzeige der ausgewählten Gegenstände (F₁ - F₃; F₄, F₅) mit der Verarbeitungseinrichtung (1) verbunden ist.

20. Vorrichtung nach Anspruch 19, dadurch gekennzeichnet, daß die Bedieneinrichtung (6) zur Anwahl eines der angezeigten Gegenstände (F₁ - F₃; F₄, F₅) vorgesehen ist.

21. Vorrichtung nach Anspruch 19 oder 20, dadurch gekennzeichnet, daß auf der Anzeigeeinrichtung (6) einzelne Details der angewählten Gegenstände anzeigbar sind.

22. Vorrichtung nach einem der Ansprüche 16 bis 21, dadurch gekennzeichnet, daß in der Verarbeitungseinrichtung (1) einer oder mehrere der Parameter (P₁; P₂) über zusätzliche aus dem ersten Speicher (2) abrufbare Verknüpfungsregeln (R₃) mit aus dem zweiten Speicher (2) abrufbaren Daten (D₁; D₂) verknüpfbar sind und das Ergebnis der Verknüpfung eine Erweiterung der ausgewählten Gegenstände (F₁ - F₃; F₄, F₅) darstellt.

23. Vorrichtung nach Anspruch 22, dadurch gekennzeichnet, daß über die Bedieneinrichtung (6) ein Auswahlbefehl (B₁) an die Verarbeitungseinrichtung (1) sendbar ist, über den mindestens einer der ausgewählten Gegenstände (F₁ - F₃; F₄, F₅) mit dem Ergebnis der Verknüpfung veränderbar und/oder ergänzbar ist.

24. Vorrichtung nach einem der Ansprüche 16 bis 23, dadurch gekennzeichnet, daß der Verarbeitungseinrichtung (1) über die Eingabeeinrichtung (4) zusätzliche Parameter (P_{A}) zuführbar sind, mit denen die ausgewählten Gegenstände veränderbar und/oder ergänzbar sind.

25. Vorrichtung nach einem der Ansprüche 16 bis 24, dadurch gekennzeichnet, daß die Verknüpfungsregeln (R₁; R₂; R₃) durch Fuzzy-Regeln gebildet sind.

26. Vorrichtung nach einem der Ansprüche 16 bis 24, dadurch gekennzeichnet, daß die Verknüpfungsregeln (R₁; R₂; R₃) durch neuronale Netzwerke gebildet sind.

27. Vorrichtung nach einem der Ansprüche 16 bis 26, dadurch gekennzeichnet, daß die Verknüpfungsregeln (R₁; R₂; R₃) Regeln zur Auswertung der Parameter (P₁; P₂) und/oder Regeln zur Auswahl der Gegenstände aufgrund der Parameter (P₁; P₂) oder der ausgewerteten Parameter (P₁; P₂) sind.

28. Vorrichtung nach einem der Ansprüche 16 bis 27, dadurch gekennzeichnet, daß die über die Eingabeeinrichtung (4) eingebbaren Parameter (P₁; P₂) Merkmale der auswählbaren Gegenstände, Merkmale der eingebenden Person und/oder Merkmale der Verwendung der auszuwählenden Gegenstände sind.

29. Vorrichtung nach einem der Ansprüche 16 bis 28, dadurch gekennzeichnet, daß die auswählbaren Gegenstände (F₁ - F₃; F₄, F₅) Kraftfahrzeuge sind.

30. Vorrichtung nach Anspruch 29, dadurch gekennzeichnet, daß die zusätzlichen Parameter (P_{A}) Ausstattungsteile der Kraftfahrzeuge sind.
